# EUROPEAN PATENT SPECIFICATION

(11) **EP 2 542 128 B1**
(45) Date of publication and mention of the grant of the patent: **10.09.2014**
(21) Application number: 11706600.1
(22) Date of filing: 04.03.2011
(51) Int. Cl.: A47J 31/46

(54) **Reduction of pump nuisance**
Verringerung von Pumpbelästigung
Réduction de nuisance d'une pompe

(30) Priority: 05.03.2010 EP 10155705
(43) Date of publication of application: 09.01.2013
(73) Proprietor: Nestec S.A., 1800 Vevey (CH)
(72) Inventor: MAISCH, Rainer, 4537 Wiedlisbach (CH); GAVILLET, Gilles, 1670 Ursy (CH)
(74) Representative: Schnyder, Frank Simon
(86) International application number: PCT/EP2011/053251
(87) International publication number: WO 2011/107574

(56) References cited:
- WO-A1-2007/014891
- WO-A1-2009/150030

## Description

### Field of the Invention

The present invention concerns the reduction of nuisance generated by vibrating pumps, in particular in a beverage preparation machine.

For the purpose of the present description, a "beverage" is meant to include any liquid food, such as tea, coffee, hot or cold chocolate, milk, soup, baby food, etc... A "capsule" is meant to include any pre-portioned beverage ingredient within an enclosing packaging of any rriaterial, in particular an airtight packaging, e.g. plastic, aluminium, recyclable and/or biodegradable packagings, and of any shape and structure, including soft pods or rigid cartridges containing the ingredient.

### Background Art

Beverage preparation machines have been known for a number of years. For example, US 5,943,472 discloses a water circulation system between a water reservoir and a hot water or vapour distribution chamber of an espresso machine. The circulation system includes a valve, metallic heating tube and pump that are connected together and to the reservoir via different silicone hoses, which are joined using clamping collars. Suitable pumps for beverage machines are for instance disclosed in US 2, 715, 868, 5, 392, 694, 5,992,298, 6,554,588, WO 2006/032599 and WO 2009/150030.

For instance, US 2,715,868 discloses a beverage preparation machine for extracting a beverage ingredient within an extraction chamber supplied in a cartridge by water guided into the extraction chamber and forced through the cartridge. The pump is of the rotary type and has blades operating in a pump chamber to transfer liquid under pressure to the extraction chamber.

US 5,392,694 discloses an espresso machine with a piston pump mounted in the machine's housing. The pump has a reciprocating piston that is actuated by an eccentric drive having a connecting rod that is engaged with the piston.

US 5,992,298 discloses a beverage preparation machine with a vibrating pump suspended in mobile or overhung manner, the vibrations being transferred to an in-line heater to vibrate the heater with the view of reducing liming in the heater.

US 6,554,588 discloses a composite piston for vibration pumps suitable for use in espresso machines.

In general, during operation of the pump of such a device, vibrations occur due to an oscillating or rotational movement of a driven part, e.g. a piston or a number of blades, housed within a pump chamber of the pump. These vibrations may then be transferred to the housing of the device and thus negatively affect the quality or operational feel of the beverage preparation device. Moreover, the vibrations may negatively affect other components housed within the housing of the device.

To address this problem, it has been proposed in WO 2006/032599 to suspend the pump in the beverage preparation machine with spaced apart suspenders. In WO 2009/150030, it has been proposed to support the pump with an elastic leaf support, e.g. a bellow-shaped elastic support member. Another dampening pump support has been proposed in PCT/EP10/050099.

WO-A-2007/014 891 discloses a pump according to the preamble of independent claim 1.

There is still a need to reduce the nuisance generated by the operation of pumps in beverage preparation machines.

### Summary of the Invention

A preferred object of the present invention is to provide a pump that includes a nuisance inhibitor, in particular a noise inhibitor.

Therefore, the invention relates to a pump for a beverage preparation machine. The pump has: a pump inlet; a pump outlet; a liquid driver for pressurising and circulating a liquid from the pump inlet to the pump outlet; and a downstream pump conduit connecting in fluid communication the liquid driver to the pump outlet.

Typically, the liquid driver comprises a pump chamber in fluid communication with the pump inlet and the pump outlet. For instance, the liquid driver comprises a reciprocating pump piston contained in the pump chamber for pressurising and circulating liquid from the pump inlet through the pump chamber to the pump outlet and out therefrom. Optionally, a piston spring is provided with the pump chamber to exert a force on the piston. An electromagnetic solenoid can be provided in the periphery of the pump chamber, e.g. within a pump housing, to drive the piston. Axial reciprocating movement of the piston within the pump chamber is enabled due to activation by means of the solenoid. Vibrations are typically generated by the action of the reciprocating piston in the pump. Illustrations of pumps having a pump driver including a pump chamber containing a reciprocating piston are disclosed in WO 2009/150030, which is hereby incorporated by way of reference. Alternatively, it is also possible to have a rotary-type pump with a drive element that rotates in the pump chamber at a given frequency and that generates vibrations at a corresponding frequency.

Vibrations generated by the operation of the pump are in particular communicated to the structural parts of the pump, e.g. the pump housing including the pump inlet and outlet. To reduce or inhibit propagation of pump vibrations, the pump may be mounted in a machine, e.g. a beverage preparation machine, by dampening mechanical connection arrangements, e.g. as taught in WO 2009/150030 and in PCT/EP10/050099 which are hereby incorporated by way of reference.

In accordance with the invention, the downstream pump conduit comprises a liquid dampener for dampening upstream the pump outlet vibrations in this liquid which are generated by the liquid driver so as to circulate via the pump outlet dampened pressurised liquid from the liquid driver. Such vibrations are normally generated during operating of the pump.

Hence, the vibration inhibitor of the pump is mounted directly in the pump internal fluid line, e.g. along a conduit, e.g. duct, extending form the pump driver to the pump outlet, to reduce vibrations generated directly in the driven liquid by the action of the pump driver, e.g. a piston reciprocating at a certain frequency or a rotary drive element rotating at a certain frequency against the liquid and generating corresponding vibrations therein. Hence, the vibration inhibitor integrated in the pump is arranged to dampen the vibrations of the liquid so that the liquid delivered by the pump outlet is vibration free or vibrates at a reduced magnitude compared to the magnitude of vibrations imparted to the liquid by the pump driver. Normally, the liquid vibrates at a frequency corresponding to the vibration frequency of the pump driver.

It follows that nuisance and in particular noise generated by the transmission of vibrations via the liquid circulated by the pump to a liquid line downstream the pump and parts mechanically connected to such a line, e.g. to a heater such as an inline heater and/or a brewing unit and/or the housing of a machine such as a beverage preparation machine containing the pump, are inhibited, i.e. suppressed or at least reduced, by the configuration of the fluid line within the pump itself.

Moreover, by providing the pump with an integrated fluid vibration inhibitor, no external fluid dampener is needed. This simplifies a fluid circuit containing such a pump in terms size, number of components and assembly steps. In particular no additional fluid connectors are needed which increases the costs and the risk of fluid leakage. Moreover, there is no need for a dampening line, in particular a loop and/or deformable line, connected to the outlet of the pump for dampening the vibrating energy in the liquid delivered by the pump. The outlet of the pump may be connected to a rigid liquid guide, e.g. a duct, even a short guide, without significant propagation of vibrations via the liquid delivered by the pump or at least with a significantly reduced propagation of vibrations.

Of course, the pump including such a liquid vibration inhibitor may be mounted in a machine, such as a beverage preparation machine, by a dampening mechanical connection arrangement so as to inhibit propagation of vibrations via the pump structure to the machine in addition to inhibiting propagation of vibrations via the liquid delivered by the pump outlet.

Typically, the downstream pump conduit comprises a liquid dampening section delimited by the liquid dampener. The liquid dampener may comprise a flexible membrane delimiting the liquid dampening section and in particular sealing off the dampening section. For instance, the flexible membrane is made of at least one of silicone, rubber and TPE. The flexible membrane may have a shore hardness in the range of 50 to 90.

In the case of a pump for a beverage preparation machine, e.g. having a flow rate in the range of 30 to 1000 ml/min, in particular 50 to 750 ml/min such as 60 to 600 ml/min, at a pressure of 5 to 25 bar, the membrane e.g. silicon or rubber, may have a working area exposed to the flow of pumped liquid having a diameter in the range of 5 to 30 mm such as 10 to 25 mm and a thickness in the range 0.5 to 2 mm.

In an embodiment, the liquid dampener includes a gas cavity, in particular an air cavity, that is separated from the liquid dampening section by the flexible membrane. Typically, the cavity is sealed or has a small conduit communicating with the external environment for dampening exchange of gas between inside and outside the cavity at a reduced flow rate. Oscillating deformation of the flexible membrane can thus be dampened by the volume of confined or more or less confined gas cavity which is delimited by the membrane and which is compressed and expanded by movements of the membrane. The liquid dampener may comprise a cap delimiting the gas cavity, in particular a threaded cap and/or a removable cap, the cap being optionally secured in a pump housing. The cap can be arranged to secure the flexible membrane against the liquid dampening section. Other cap assembly means are contemplated such as gluing, welding, force fitting e.g. press fitting the cap into the housing. The cap may also be formed integrally with the downstream pump conduit and/or the pump housing.

Such a cap and membrane configuration provides the advantage to be simple to assemble in the pump, e.g. by screwing the cap and/or squeezing the membrane against the fluid line.

The cap may be made from a glass fibre reinforced polyamide and/or from a metal.

The downstream pump conduit may comprise a liquid directing section, e.g. a duct portion, guiding liquid from the liquid driver directly into the liquid dampening section and against the liquid dampener, so that liquid guided by the directing section is intercepted and redirected by the liquid dampener. The liquid directing section and the liquid dampening section may define respective liquid flow directions that are at an angle in the range of 30 to 150 deg, in particular in the range of 60 to 120 deg, such as 75 to 105 deg, optionally 85 to 95 deg. Hence, liquid circulated under pressure and delivered from the directing section can be directed to hit against the liquid dampener so that vibration energy carried by the liquid is transferred and dissipated by the liquid dampener intercepting such a flow of liquid.

The downstream pump conduit may include a liquid redirecting section, e.g. a duct or conduit portion, guiding liquid from the liquid dampening section to the pump outlet. The flow of liquid may thus be returned against the liquid dampener.

The liquid redirecting section and the liquid dampening section define respective flow directions that are at an angle in the range of 30 to 150 deg, in particular in the range of 60 to 120 deg, such as 75 to 105 deg, optionally 85 to 95 deg.

For instance, the liquid dampening section receives a flow of liquid delivered by the liquid directing section onto the liquid dampener and delivers the flow of liquid into the liquid redirecting section. The directing section, the dampening section and the redirecting section may be generally u-shaped or v-shaped with the dampening section inbetween the directing and redirecting sections.

Such a geometry of the liquid line between the pump driver and the pump outlet optimises the space requirements and integration of the fluid functions.

According to the invention, the downstream pump conduit is made: of a a rigid integral member, extending from the liquid driver to the pump outlet; and of the liquid dampener extending over at least part of the rigid member. In this configuration, the rigid member and the liquid dampener contain together the downstream pump conduit. For instance, the pump has a pump housing that is integral with this rigid member and that optionally contains the liquid driver.

The liquid dampener can be adjusted to the frequency of vibration of the liquid imparted by the pump driver, in particular when the pump driver generates vibrations at a generally constant frequency or vibrations in a limited frequency range. For instance, the liquid driver can be arranged to impart a vibration frequency to the liquid directed to the pump outlet, the liquid dampener having a resonance frequency that is remote from said vibration frequency.

Typically, the membrane can be adjusted to the frequency and energy of the vibrating liquid to reduce the amplitude of the variation by at least 20%, in particular at least 50% such as at least 75%. For instance, a liquid may be pressurised by the liquid driver of the pump to an average pressure in the range of 10 to 20 bar, the un-dampened vibration total amplitude generated by the liquid driver corresponding to e.g. 30 to 60% of the average amplitude. For example, an average pressurisation of the liquid to 10 bar may include a pressure oscillation of 3 to 6 bar, i.e. the liquid's pressure can oscillate between 4 and 16 bar to between 7 and 13 bar. An average pressurisation to 20 bar may include an un-dampened oscillation of 6 to 12 bar, e.g. the liquid's pressure can oscillate between 14 to 26 bar to between 8 to 32 bar. Such instantaneous pressure variations propagate via the liquid and should thus be dampened. With the pump-integrated dampener of the invention, such pressure may be reduced significantly before leaving the pump via the pump's outlet, e.g. reduced between 30 and 75 or even 85%.

The invention also relates to a beverage preparation machine comprising a pump as described above.

For instance, the beverage preparation machine comprises: a machine housing; a pump which vibrates during use and which is mounted in the housing; and an pump-external dampener for preventing or reducing the transmission of vibrations from the pump to other machine parts. The external dampener may include a spring or another flexible element on which the pump is mounted in the housing, for example a helicoidal dampening spring.

The beverage preparation machine may include one or more of the following components:
a) a brewing unit for receiving an ingredient of this beverage, in particular a pre-portioned ingredient supplied within a capsule, and for guiding an incoming flow of liquid, such as water, through said ingredient to a beverage outlet;
b) an in-line heater, such as a thermoblock, for heating this flow of liquid to be supplied to the brewing unit;
c) the abovementioned pump for pumping this liquid through the in-line heater;
d) one or more fluid connecting members for guiding this liquid from a source of liquid, such as a tank of liquid, to the beverage outlet;
e) an electric control unit, in particular comprising a printed circuit board (PCB), for receiving instructions from a user via an interface and for controlling the in-line heater and the pump; and
f) one or more electric sensors for sensing at least one operational characteristic selected from characteristics of the brewing unit, the in-line heater, the pump, a liquid reservoir, an ingredient collector, a flow of this liquid, a pressure of this liquid and a temperature of this liquid, and f or communicating such characteristic(s) to the control unit.

The heater may be a thermoblock or an on demand heater (ODH), for instance an ODH type disclosed in EP 1 253 844, EP 1 380 243 and EP 1 809 151.

The components may be fully automatically or essentially automatically assembled, as disclosed in WO 2009/130099 which is hereby incorporated by way of reference.

The pump can be electrically connected to a control unit via an electric connection that does not transmit the vibrations or significantly reduces such vibrations. For instance, the pump is connected via flexible cables or wires. The control unit may include a PCB, the electric connection comprising vibration-barrier flexible cables or wires pre-mounted with both ends on the PCB, and with one of these ends on a detachable portion of the PCB forming a connector for electrically connecting and powering the pump. The detachable PCB portion may be provided with electric connecting stripes. For example, the connector is a plug. Forming the connector as a detachable part of the PCB facilitates automatic assembly: despite the flexible cables, the position of the connector is entirely determined relatively to the PCB before detachment thereof and can thus easily be seized and detached by an automatic assembly system for subsequent automatic connection to the pump.

### Brief Description of the Drawings

The invention will now be described with reference to the schematic drawings, wherein:
- Figure 1 shows an internal structure of a beverage preparation machine according to the invention;
- Figure 2 shows in greater detail the fixation of a pump in the machine illustrated in Fig. 1;
- Figure 3 is a perspective view of the pump shown in Figs 1 and 2; and
- Figure 4 is a cross-section of part of the pump shown in Figure 3 illustrating the vibration inhibitor in accordance with the invention;
- Figure 5 shows a time-based graph of pressures measured in a liquid at the outlet of operating pumps with and without liquid dampeners according to the invention.

### Detailed description

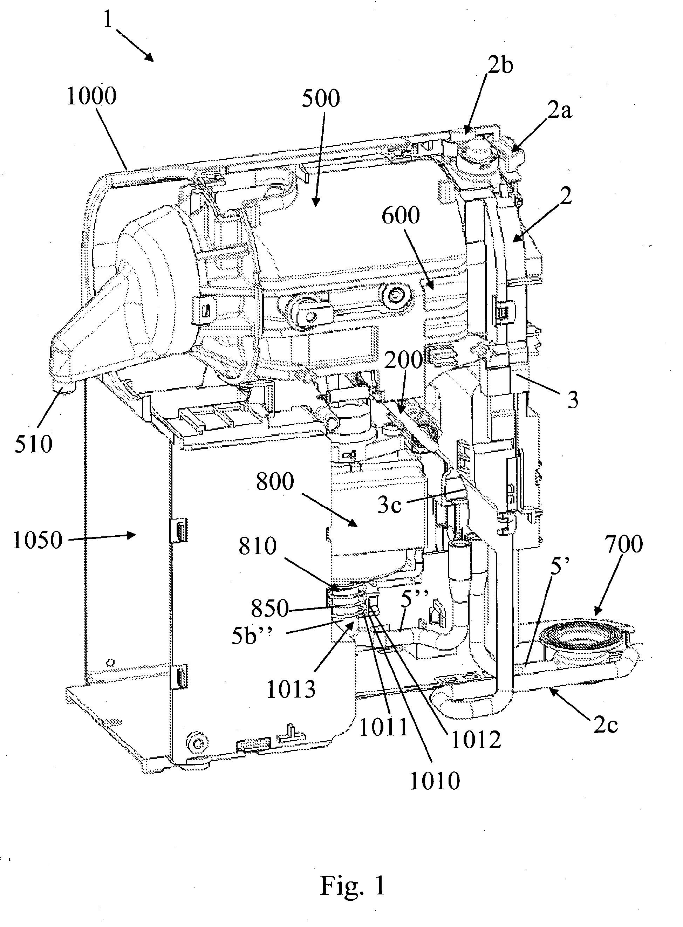

Figure 1 illustrates different parts of a beverage preparation machine 1. Typically, this type of beverage preparation machine is suitable to prepare coffee, tea and/or other hot beverages including soups and like food preparations. The pressure of the liquid circulated to the brewing chamber may for instance reach about 10 to 20 bar. The various parts of beverage preparation machine 1 and its assembly are generally disclosed in WO 2009/130099, the content of which is hereby incorporated by reference.

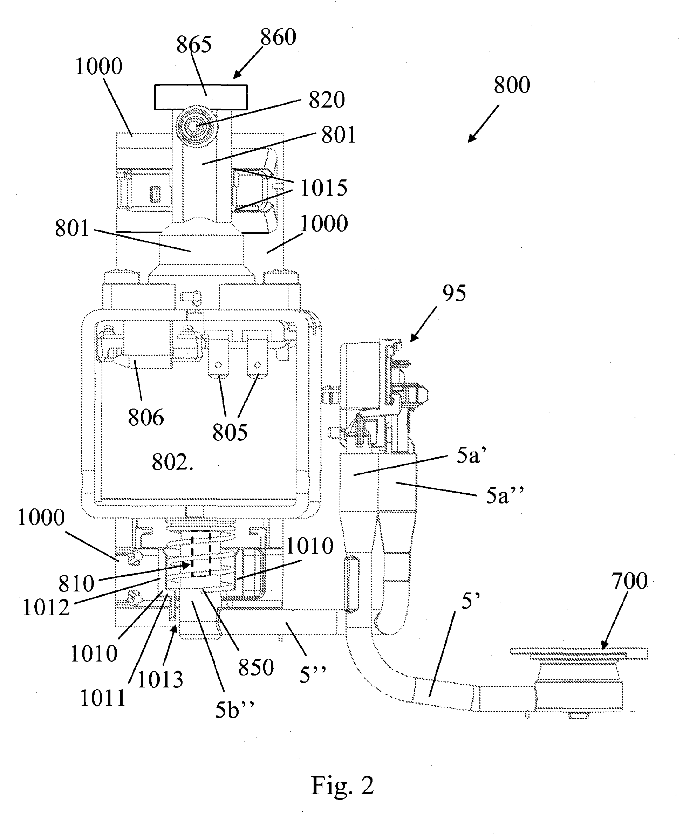

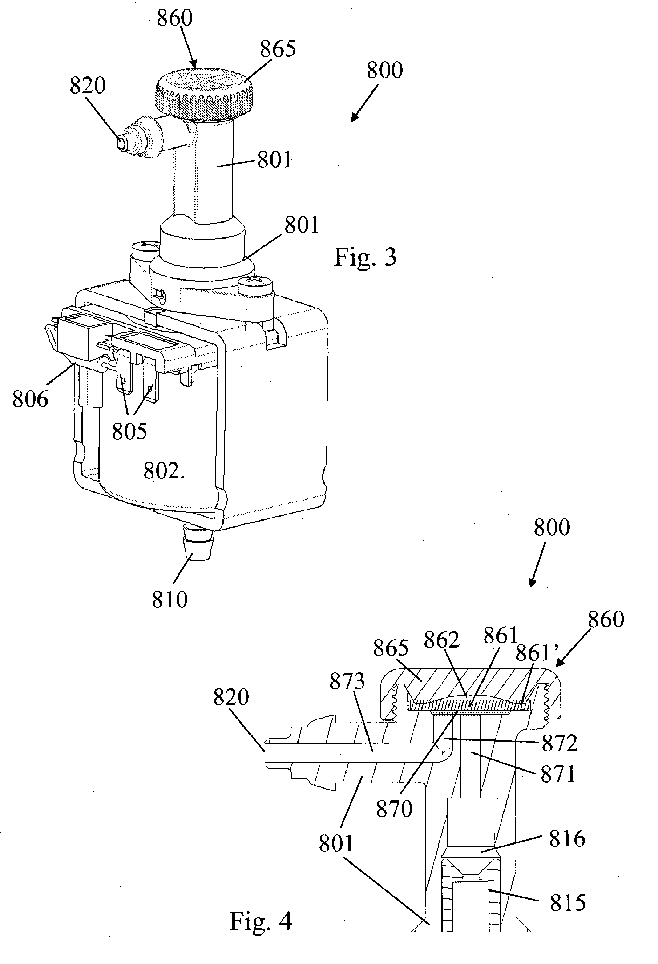

Figure 1 generally provides an overall view of the internal structure that may be found in a beverage preparation machine 1 according to the invention. Figure 2 shows in greater detail a particular embodiment of pump 800 mounted in beverage preparation machine 1. Figures 3 and 4 illustrated in greater details an embodiment of a pump 800 according to the invention.

The components are shown mounted in a beverage machine housing 1000 in a perspective view of part of beverage preparation machine 1. Housing 1000 delimits a cavity 1050 for receiving a used capsule collector and a drip tray arrangement, for instance of the type disclosed in EP 1 867 260. The rear part of machine 1 is arranged to receive a water tank. An outside view with the water tank, capsule collector and drip tray collector of a machine of this kind is shown in WO 2010/015427.

For example, beverage machine housing 1000 is formed of two half-shells, e.g. general clamshells, one of which serves as a receiving support for the assembly of the inner components and modules of beverage machine 1 into housing 1000. Hence, during assembly, all inner components and modules may be placed and connected within one half-shell. Connection between the components and between the modules may be made before and/or upon assembly into the shell. When all inner components and modules are in place and connected in the half shell, machine housing 1000 is closed with the second half-shell, in particular by clipping the second half shell against the first one and/or by snap fit. The components and modules are preferably secured within machine housing 1000 by clipping, snap-fitting, clamping, squeezing or any other geometric immobilisation of the components and modules within a corresponding matching inner geometry of the housing 1000, in particular walls and partitions of the housing. Hence, only few or no screws, rivets, glue, welding or other complicated connections for mechanical assembly and/or hardly disassemblable connections, are needed to secure the inner components and modules within machine housing 1000. This greatly simplifies the assembly as well as later possible maintenance and/or servicing of beverage preparation machine 1.

Machine 1 has a brewing unit 500 for receiving an ingredient of the beverage to be prepared, in particular a pre-portioned ingredient supplied within a capsule as known in the art. Brewing unit 500 is configured for guiding an incoming flow of liquid, such as water, through the ingredient, to a beverage outlet 510. Examples of this type of brewing units are disclosed in WO 2005/004683, WO 2007/135135, WO2007/135136 and WO 2009/043630, which are hereby incorporated.

Furthermore, beverage preparation machine 1 has an in-line heater, such as a thermoblock 600, for heating the flow of liquid to be supplied to brewing unit 500. Liquid is driven from a liquid source in the form of a reservoir mounted on a fluid connector 700 through heater 600 via a pump 800 which are all interconnected. Suitable thermoblock heaters are for instance disclosed in WO 2009/043865 which is hereby incorporated by way of reference. It is also possible to use instant heaters, e.g. as disclosed in WO 2009/043851 or on demand heaters as disclosed in WO 2006/029763, which are hereby incorporated by way of references.

Hence, the beverage preparation machine has various connection members, in particular tubes or other members with ducts or channels 5',5" ,200, for guiding the liquid from reservoir connector 700 to beverage outlet 510.

Vibrating pump 800 mounted in housing 1000 and shown in greater details in Figs 2 and 3, in which the same numeric references designate the same elements, is of the type of pumps generally used in beverage preparation machines. Vibrating pumps provide a reliable form of pressure to the circulated liquid. In particular, pump 800 drives water from a low pressure system to a higher pressure that is needed, e.g. in a coffee machine for preparing espresso coffee.

As indicated in Figs 1 and 2, to minimise transfer of vibrations from pump 800 to other parts of the beverage preparation machine, pump 800 is mounted on a spring 850, in particular a helicoidal spring, acting as a pump-external dampener.

For controlling the beverage preparation machine, the machine includes an electric control unit 2 shielded by a PCB housing 3 that encloses a PCB, for receiving instructions from a user via an interface 2b and for controlling in-line heater 600 and pump 800.

Pump 800 has a safety fuse 806 and electric connectors 805 that are electrically connected to control unit 2. Preferably, the electric connection to a control unit 2 does not transmit the vibrations or significantly reduces vibrations. For instance, pump 800 is connected via flexible cables or wires to control unit 2. For example, such electric connection comprises flexible cables or wires pre-mounted with both ends on PCB, with one of these ends on a detachable portion of PCB, such as a portion provided with electric connecting stripes, forming a connector, such as a plug or socket, for electrically connecting and powering pump 800. Alternatively, cables may be soldered or welded directly to pump connectors 805 and the PCB.

PCB housing 3 has an opening 3c for accommodating a flow-meter 95 that is directly assembled onto the PCB secured in housing 3 and that is connected within fluid circuit 5 extending outside housing 3.

Beverage preparation machine 1 has one or more electric sensors, for example flowmeter 95, for sensing at least one operational characteristic selected from characteristics of brewing unit 500, in-line heater 600, liquid reservoir, an ingredient collector in cavity 1050, pump 800, a flow of the liquid, a pressure of the liquid and a temperature of the liquid, and for communicating such characteristics to control unit 2.

Also shown in Figure 1, a master switch 2a connected to control unit 2 and an electric cord 2c for connection to the mains.

As can be seen in Figs 1 and 2, a low pressure system 5',5" makes the link between the water tank connector 700, flowmeter 95 and pump 800. Water tank connector 700 is connected to a tubing 5',5" of the low pressure water circulation system. This tubing connects a water reservoir (not shown) to pump 800. Downstream from connector 700, flowmeter 95 is located between tubular sections 5',5''. Flowmeter 95 is connected, at an intermediate portion of tubing 5',5'' inbetween an intermediate tubing outlet 5a' and inlet 5a'' that are integral with tubing 5',5''.

In fact, tubing 5', 5'', tubing's tank connector 700, intermediate outlet 5a' and inlet 5a'' of tubing 5',5'' and outlet 5b'' may form a single component which makes it suitable to be handled automatically by providing reference parts. Indeed, despite a possible use of flexible non-resilient tubular sections 5',5'', e.g. made of silicon, the end portions 700, 5b'' and intermediate portions 5a',5a'' may be oriented and spatially referenced automatically, e.g. by using a vibrating bowl, for full automatic handling and assembly thereof within beverage preparation machine 1.

The integration of these low-pressure tubing parts and pump support member results in the reduction in the number of stand alone parts of the beverage preparation machine and therefore, this leads to the reduction of the overall number of parts. The consequence is the improvement of assembly for the beverage preparation device and a cost reduction as well as an automatic assembly process that does not require human intervention.

In addition, since the number of connectors is decreased, a greater integration and reliability of the system is achieved, by eliminating the weak spots where leaks can occur. The disposition of flowmeter 95 integrated between water tank connector 700 and pump 800 is optional. The flowmeter may be provided downstream from the pump before or after an inline water heater.

Pump 800 can be a vibrating pump of the type known in the field of beverage preparation machines. For instance, a pump piston 815 is movably mounted within a pump chamber 816. Preferably, a spring may be provided within pump chamber 816 in order to exert a force on piston 815. Moreover, an electromagnetic solenoid can be provided in the periphery of pump chamber 816 in order to drive piston 815. The solenoid is typically confined in outer pump housing 802. Hence, an axial reciprocating movement of piston 815 within pump chamber 816 is enabled due to activation by means of the solenoid. Pump chamber 816 is connected via a liquid inlet 810 (shown in doted lines in Fig. 2) and a liquid outlet 820 of pump 800. The pump's piston 815 normally includes a bore which can be selectively closed by a valve in order to pump liquid from liquid inlet 810 to liquid outlet 820 of pump 800 during the reciprocating movement of piston 815. Inlet 810 has an outer serrated connection portion that is force-fitted into outlet 5b'' of tubing 5',5'', e.g. made of silicon, so as to provide a water-tight sealed connection between pump 800 and fluid circuit 5',5''.

Preferably, reciprocating piston 815 of pump 800 is arranged to move generally in the axial direction of dampening spring 850. The helicoidal dampening spring 850 extends axially around a pump bottom part 810, in particular a pump inlet. Hence, the pump bottom part 810 may form a pump inlet (shown in dotted lines in Fig. 2) that is connected to tubing 5',5'' via tubing outlet 5b''. Helicoidal dampening spring 850 extends axially around pump inlet 810 and around the tubing 5',5''. It follows that spring 850 can be mounted at the extremity of pump 800 when pump inlet 810 is connected to outlet 5b''.

Helicoidal dampening spring 850 is supported by an inner seat 1010. Spring seat 1010 comprises a bottom ledge 1011 supporting the dampening spring 850 and peripheral sidewalls 1012 maintaining the dampening spring in place. Inner spring seat 1010 delimits a bottom opening 1013 through which outlet 5b'' extends.

Inner spring seat 1010 is integral with or fixed to the housing 1000. Typically, seat 1010 can be moulded with housing 1000.

Dampening spring 850 is arranged to hold and guide an outer pump part, in particular pump bottom part 810, or a component connected thereto such as tubing outlet 5b'', so as to allow friction free movements of the outer pump part or the component connected thereto when pump 800 is vibrating.

In particular, spring 850 spaces pump inlet 810 and tubing outlet 5b'' from housing 1000 and from seat 1010, so as to allow friction free reciprocating movements of these parts held by spring 850 when pump 800 is vibrating during use.

Moreover, to balance pump 800, a plain bearing 1015 is provided to hold and guide pump 800 and to allow movements of pump 800 when vibrating, in particular a plain bearing formed by one or more inner walls of housing 1000, for instance by facing elements of the half-shells of housing 1000. Plain bearing 1015 is arranged to hold and guide an upper part of pump 800, in particular pump outlet 820.

It is of course possible to replace plain bearing 1015 by a second dampening spring, e.g. of the same type as dampening spring 850, connected to the top part of pump 800, e.g. adjacent pump outlet 820, or even to use a single dampening spring and let the bottom part, e.g. inlet 810, freely moving by itself or with outlet 5b'' of tubing 5', 5''.

Assembly 200 includes a connector for connecting pump outlet 820. A similar rigid tubular system may also be provided upstream the pump (not shown). Such connectors are disclosed in detail in WO 2009/130099.

Hence, vibrations resulting from the operation of pump 800 may be absorbed at this connection without significant transmission along the fluid conduits or pipes. Moreover, due to an elastic sealing member in the connector for outlet 820, inhibition of vibration transmission is even further enhanced.

To further inhibit vibration communication downstream the pump to the beverage preparation machine, in particular to heater 600, a similar connection can be provided between tube 200 and the inlet of heater 600.

As illustrated in Figs 3 and 4, pump 800 has an inner pump housing 801 that bears pump inlet 810 and pump outlet 820 and an outer housing 802. Inner pump housing 801 contains a liquid driver 815,816 for pressurising and circulating a liquid from pump inlet 810 to pump outlet 820 via downstream pump conduit 870,871,872. The liquid driver comprises a pump chamber 816 enclosing a reciprocating pump piston 815 driven by a peripheral electromagnetic solenoid (not shown) and a piston return spring (not shown). The solenoid is contained in outer pump housing 802. Liquid driver 815,816 comprises pump chamber 816 in fluid communication with pump inlet 810 and pump outlet 820. Pump piston 815 reciprocates in chamber 816 for pressurising and circulating liquid from pump inlet 810 through pump chamber 816 to pump outlet 820.

In accordance with the invention, downstream pump conduit 870,871,872 comprises a liquid dampener 860 for dampening upstream pump outlet 820 vibrations in such liquid which are generated by liquid driver 815,816, in particular by piston 815, so as to circulate via pump outlet 820 dampened pressurised liquid from liquid driver 815,816.

Downstream pump conduit 870,871,872 comprises a liquid dampening section 870 delimited by liquid dampener 860. Liquid dampener 860 comprises a flexible membrane 861 delimiting liquid dampening section 870. Flexible membrane 861 may be made of silicone, rubber or TPE and have a shore hardness in the range of 50 to 90.

Downstream pump conduit 870,871,872 further comprises a liquid directing section 871 guiding liquid from liquid driver into liquid dampening section 870 against liquid dampener 860, so that liquid guided by directing section 871 is redirected by the liquid dampener 860, in particular by membrane 861.

As illustrated in Fig. 4, the general direction of flow in section 871 is at least approximately perpendicular to the general direction of flow in section 870 so that liquid circulated under pressure along section 871 hits perpendicularly liquid dampener 860 that faces the downstream end of section 871. Furthermore, downstream pump conduit 870,871,872 includes a liquid redirecting section 872 guiding liquid from the liquid dampening section to pump outlet 820. A secondary redirecting section 873, at an angle, e.g. perpendicular, to the redirecting section 872 is provided between redirecting section 872 and outlet 820.

Directing section 871, dampening section 870 and redirecting section 872 are in a generally u-shaped arrangement so that the vibration energy of liquid leaving chamber 816 can be optimally absorbed and dissipated by liquid dampener 860. Hence, liquid flowing along redirecting sections 872,873 and out of pump 800 via outlet 820 is at least partly relieved by liquid dampener 860 of the vibration energy imparted to the liquid by liquid driver 815,816.

Liquid dampener 860 further includes a gas cavity 862, in particular an air cavity, that is separated from liquid dampening section 870 by flexible membrane 861. Liquid dampener 860 has a cap 865 delimiting gas cavity 862, in particular a threaded removable cap. Flexible membrane 861 is sealed along a peripheral part 861' and urged against liquid dampening section 870 by cap 865.

As illustrated in Fig. 4, downstream pump conduit 870,871,872 is made: of a rigid integral member 801 extending from liquid driver 815,816 to pump outlet 820; and of liquid dampener 860 extending over at least part of rigid member 801. Rigid member 801 and liquid dampener 860 contain together downstream pump conduit 870, 871,872. Moreover, pump housing 801 is integral with this rigid member and may contain the liquid driver 815,816. The pump solenoid (not shown) is contained between outer housing 802 and pump housing 801.

Liquid driver 815,816 is arranged to impart a vibration frequency to liquid directed from chamber 816 to pump outlet 820, liquid dampener 860 having a resonance frequency that is remote from the vibration frequency.

Hence, pump 800 is fitted with an improved dampening system for inhibiting propagation of vibrations generated by its liquid driver 815,816 during use. On the one hand, vibrations generated in structural parts of pump 800 are dampened and inhibited from propagating beyond pump 800 by a flexible mechanical connection arrangement external to pump 800, in particular including a dampening spring 850 and/or dampening fluid connections for the pump inlet and outlet. On the other hand, vibrations generated in the liquid pressurised and circulated by pump 800 are dampened by a liquid dampener 860 internal to pump 800. For some applications and/or in a less preferred embodiment, it is possible to provide only the pump internal fluid dampener 860 without the dampening arrangement external to pump 800.

### Numeric Example

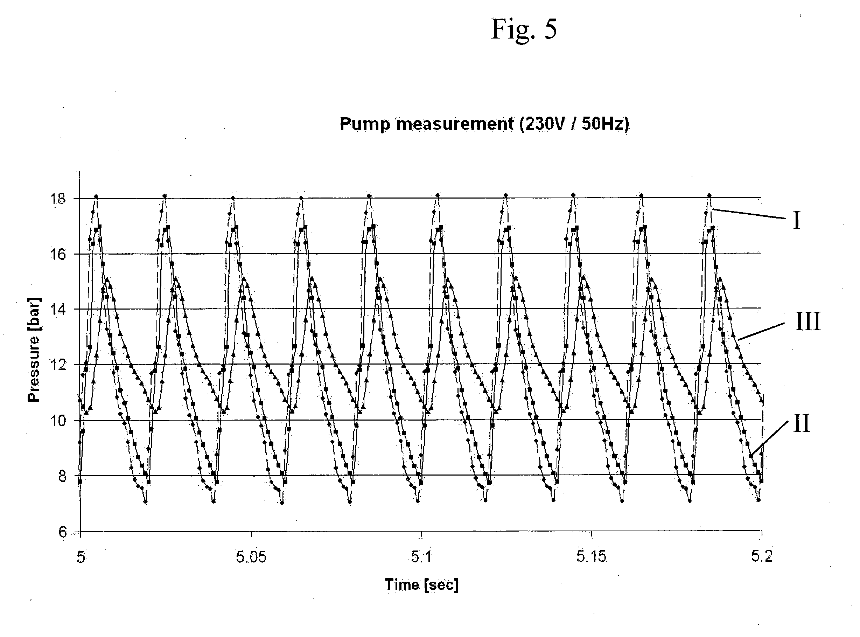

Figure 5 shows three sets I, II, III of side-by-side measured pressure values in a liquid at the outlet of three pumps having identical liquid drivers and powering and fluid conduit sections. In other words, the pumps had identical vibrating piston and solenoids powered by the mains at 230 V / 50 Hz (thus, the vibrations generated in the liquid by the liquid drivers exhibited a frequency of 50 Hz) to pressurise and circulate a liquid such as water into, through and out of the pumps. The three pumps had an identical fluid circuit, i.e. inlet and outlet duct with a diameter of 2 mm with the exception of the liquid dampener 860 when present.

Pressure measures were carried out at a rate of 1000 measures/sec. The measured pressures for each pump illustrated in Fig. 5 extend over a time span of 0.2 sec.

The first (comparative) pump had no liquid dampener. The pump exhibited at its outlet the largest pressure amplitude illustrated by curve I, i.e. oscillation between about 7 to 18 bar or an averaged pressure level of about 12.5 bar with an amplitude of overall oscillation of about 11 bar (an overall amplitude corresponding to almost 100% of the average pressure).

The second pump 800 had a liquid dampener 860 made of a dampening membrane 861 of about 10 mm diameter and 1.5 mm thickness. The membrane 861 was associated with an air cavity 862 at about atmospheric pressure having a capacity of 0.3 cm³. This pump 800 exhibited at its outlet 820 an intermediate pressure amplitude illustrated by curve II, i.e. oscillations between about 8 to 17 bar or an averaged pressure level of about 12.5 bar with an amplitude of overall oscillation of about 9 bar (an overall amplitude corresponding to about 75% of the average pressure).

This small reduction of pressure amplitude corresponds to 2 bar compared to the pump without liquid dampener and may already have a significant effect on the resulting noise reduction of the pump, especially since the noise is not perceived linearly by the human ear.

The third pump 800 had a liquid dampener 860 made of a dampening membrane 861 of about 25 mm diameter and 1.5 mm thickness. The membrane 861 was associated with an air cavity 862 at about atmospheric pressure having a capacity of 1 cm³. The third pump exhibited at its outlet 820 a small pressure amplitude illustrated by curve III, i.e. oscillations between about 10 to 15 bar or an averaged pressure level of about 12.5 bar with an amplitude of overall oscillation of about 5 bar (an overall amplitude corresponding to about 40% of the average pressure).

This significant reduction of pressure amplitude corresponds to 6 bar compared to the pump without liquid dampener and has a significant effect on the resulting noise and nuisance reduction of the pump. The noise and nuisance reduction resulting from the use of the third pump is even greater than resulting from the use of the second pump.

## Claims

1. A pump (800) for a beverage preparation machine (1) having: a pump inlet (810); a pump outlet (820); a liquid driver (815,816) for pressurising and circulating a liquid from the pump inlet to the pump outlet; and a downstream pump conduit (870,871,872) connecting in fluid communication the liquid driver to the pump outlet, said downstream pump conduit comprising a liquid dampener (860) for dampening upstream the pump outlet vibrations in said liquid which are generated by the liquid driver so as to circulate via the pump outlet dampened pressurised liquid from the liquid driver,
**characterised in that** the downstream pump conduit (870,871,872) is made:
- of a rigid integral member (801) extending from the liquid driver (815,816) to the pump outlet (820); and
- of the liquid dampener (860) extending over at least part of the rigid member (801),
the rigid member and the liquid dampener containing together the downstream pump conduit (870, 871,872).

2. The pump of claim 1, wherein the liquid driver (815,816) comprises:
- a pump chamber (816) in fluid communication with the pump inlet (810) and the pump outlet (820) via the downstream pump conduit (870,871,872); and in particular
- a reciprocating pump piston (815) contained in the pump chamber (816) for pressurising and circulating liquid from the pump inlet (810) through the pump chamber (816) to the pump outlet (820), optionally a piston spring being provided with the pump chamber to exert a force on the piston, an electromagnetic solenoid being in particular provided in the periphery of the pump chamber to drive the piston, an axial reciprocating movement of the piston within the pump chamber being enabled due to activation by means of the solenoid.

3. The pump of claim 1 or 2, wherein the downstream pump conduit (870,871,872) comprises a liquid dampening section (870) delimited by the liquid dampener (860).

4. The pump of claim 3, wherein the liquid dampener (860) comprises a flexible membrane (861) delimiting the liquid dampening section (870), optionally the flexible membrane (861) comprising at least one of silicone, rubber and TPE and/or having a shore hardness in the range of 50 to 90.

5. The pump of claim 3 or 4, wherein the liquid dampener (860) comprises a gas cavity (862), in particular an air cavity, that is separated from the liquid dampening section (870) by the flexible membrane (861).

6. The pump of claim 5, wherein the liquid dampener (860) comprises a cap (865) delimiting the gas cavity (862), in particular a threaded cap and/or a removable cap

7. The pump of claim 6, wherein the cap (865) is secured in a pump housing (801).

8. The pump of claim 6 or 7, wherein the cap (865) is arranged to secure the flexible membrane (861) against the liquid dampening section (870).

9. The pump of any one of claims 3 to 8, wherein the downstream pump conduit (870,871,872) comprises a liquid directing section (871) guiding liquid from the liquid driver (815,816) into the liquid dampening section (870) against the liquid dampener (860), so that liquid guided by the directing section is redirected by the liquid dampener.

10. The pump of claim 9, wherein the liquid directing section (871) and the liquid dampening section (870) define respective flow directions that are at an angle in the range of 30 to 150 deg, in particular in the range of 60 to 120 deg, such as 75 to 105 deg, e.g. 85 to 95 deg.

11. The pump of any one of claims 3 to 10, wherein the downstream pump conduit comprises a liquid redirecting section (872) guiding liquid from the liquid dampening section (870) to the pump outlet (820).

12. The pump of claim 11, wherein the liquid redirecting section (872) and the liquid dampening section (870) define respective flow directions that are at an angle in the range of 30 to 150 deg.

13. The pump of claim 12, wherein the respective flow directions are at an angle in the range of 60 to 120 deg, such as 75 to 105 deg, e.g. 85 to 95 deg.

14. The pump of any preceding claim, which comprises a pump housing (801) that is integral with said rigid member and that optionally contains the liquid driver (815, 816) .

15. A beverage preparation machine (1) comprising a pump (800) as defined in any preceding claim.

## Patentansprüche

1. Pumpe (800) für eine Getränkezubereitungsmaschine (1) mit: einem Pumpeneinlass (810); einem Pumpenauslass (820); einem Flüssigkeitsmitnehmer (815, 816) zum Druckbeaufschlagen und Leiten einer Flüssigkeit von dem Pumpeneinlass zu dem Pumpenauslass; sowie einer nachgeschalteten Pumpenleitung (870, 871, 872), die den Flüssigkeitsmitnehmer in Fließverbindung mit dem Pumpenauslass verbindet; wobei die nachgeschaltete Pumpenleitung einen Flüssigkeitsdämpfer (860) zum Dämpfen von Schwingungen in der Flüssigkeit stromaufwärts des Pumpenauslasses umfasst, die von dem Flüssigkeitsmitnehmer erzeugt werden, um gedämpfte, druckbeaufschlagte Flüssigkeit von dem Flüssigkeitsmitnehmer über den Pumpenauslass zirkulieren zu lassen,
**dadurch gekennzeichnet, dass** die nachgeschaltete Pumpenleitung (870, 871, 872):
- aus einem starren, integralen Teil (801) besteht, das sich von dem Flüssigkeitsmitnehmer (815, 816) zu dem Pumpenauslass (820) erstreckt; und
- aus dem Flüssigkeitsdämpfer (860) besteht, der sich zumindest teilweise über das starre Teil (801) erstreckt,
wobei das starre Teil und der Flüssigkeitsdämpfer zusammen die nachgeschaltete Pumpenleitung (870, 871, 872) enthalten.

2. Pumpe gemäß Anspruch 1, wobei der Flüssigkeitsmitnehmer (815, 816) Folgendes umfasst:
- eine Pumpenkammer (816) in Fließverbindung mit dem Pumpeneinlass (810) und dem Pumpenauslass (820) über die nachgeschaltete Pumpenleitung (870, 871, 872); und insbesondere
- einen sich hin und her bewegenden, in der Pumpenkammer (816) enthaltenen Pumpenkolben (815) zum Druckbeaufschlagen und Leiten von Flüssigkeit von dem Pumpeneinlass (810) durch die Pumpenkammer (816) zu dem Pumpenauslass (820), wobei wahlweise eine Kolbenfeder mit der Pumpenkammer vorgesehen ist, um eine Kraft auf den Kolben auszuüben, wobei ein Elektromagnet insbesondere im Umfang der Pumpenkammer zum Antreiben des Kolbens vorgesehen ist, wobei eine axiale Pendelbewegung des Kolbens innerhalb der Pumpenkammer aufgrund der Betätigung über den Elektromagneten ermöglicht wird.

3. Pumpe gemäß Anspruch 1 oder 2, wobei die nachgeschaltete Pumpenleitung (870, 871, 872) einen von dem Flüssigkeitsdämpfer (860) begrenzten Flüssigkeitsdämpfungsabschnitt (870) umfasst.

4. Pumpe gemäß Anspruch 3, wobei der Flüssigkeitsdämpfer (860) eine biegsame Membran (861) aufweist, die den Flüssigkeitsdämpfungsabschnitt (870) begrenzt, wobei die biegsame Membran (861) wahlweise mindestens der Materialien Silikon, Gummi und TPE enthält und/oder eine Shore-Härte im Bereich von 50 bis 90 aufweist.

5. Pumpe gemäß Anspruch 3 oder 4, wobei der Flüssigkeitsdämpfer (860) einen Gashohlraum (862), insbesondere einen Lufthohlraum aufweist, der durch die biegsame Membran (861) von dem Flüssigkeitsdämpfungsabschnitt (870) getrennt ist.

6. Pumpe gemäß Anspruch 5, wobei der Flüssigkeitsdämpfer (860) eine den Gashohlraum (862) begrenzende Kappe (865), insbesondere eine Schraubkappe und/oder eine abnehmbare Kappe aufweist.

7. Pumpe gemäß Anspruch 6, wobei die Kappe (865) in einem Pumpengehäuse (801) gesichert ist.

8. Pumpe gemäß Anspruch 6 oder 7, wobei die Kappe (865) so angeordnet ist, dass sie die biegsame Membran (861) an dem Flüssigkeitsdämpfungsabschnitt (870) sichert.

9. Pumpe gemäß einem der Ansprüche 3 bis 8, wobei die nachgeschaltete Pumpenleitung (870, 871, 872) einen Flüssigkeitsleitabschnitt (871) umfasst, der Flüssigkeit von dem Flüssigkeitsmitnehmer (815, 816) in den Flüssigkeitsdämpfungsabschnitt (870) an den Flüssigkeitsdämpfer (860) führt, so dass von dem Leitabschnitt geführte Flüssigkeit von dem Flüssigkeitsdämpfer umgeleitet wird.

10. Pumpe gemäß Anspruch 9, wobei der Flüssigkeitsleitabschnitt (871) und der Flüssigkeitsdämpfungsabschnitt (870) entsprechende Fließrichtungen festlegen, die in einem Winkel im Bereich von 30 bis 150 Grad liegen, insbesondere im Bereich von 60 bis 120 Grad, wie z.B. 75 bis 105 Grad, beispielsweise 85 bis 95 Grad.

11. Pumpe gemäß einem der Ansprüche 3 bis 10, wobei die nachgeschaltete Pumpenleitung einen Flüssigkeitsumleitabschnitt (872) aufweist, der Flüssigkeit von dem Flüssigkeitsdämpfungsabschnitt (870) zu dem Pumpenauslass (820) führt.

12. Pumpe gemäß Anspruch 11, wobei der Flüssigkeitsumleitabschnitt (872) und der Flüssigkeitsdämpfungsabschnitt (870) entsprechende Fließrichtungen festlegen, die in einem Winkel im Bereich von 30 bis 50 Grad liegen.

13. Pumpe gemäß Anspruch 12, wobei die jeweiligen Fließrichtungen in einem Winkel im Bereich von 60 bis 120 Grad liegen, wie z.B. 75 bis 105 Grad, beispielsweise 85 bis 95 Grad.

14. Pumpe gemäß einem vorhergehenden Anspruch, welche ein Pumpengehäuse (801) umfasst, das einstückig mit dem starren Teil ausgebildet ist und das wahlweise den Flüssigkeitsmitnehmer (815, 816) enthält.

15. Getränkezubereitungsmaschine (1) mit einer in einem vorhergehenden Anspruch definierten Pumpe (800).

## Revendications

1. Pompe (800) pour une machine de préparation de boisson (1) présentant : une entrée de pompe (810) ; une sortie de pompe (820) ; un dispositif d'entraînement de liquide (815, 816) pour mettre sous pression et faire circuler un liquide de l'entrée de pompe à la sortie de pompe ; et un conduit de pompe aval (870, 871, 872) reliant en communication fluidique le dispositif d'entraînement de liquide à la sortie de pompe, ledit conduit de pompe aval comprenant un amortisseur de liquide (860) pour amortir en amont les vibrations de sortie de pompe dans ledit liquide qui sont générées par le dispositif d'entraînement de liquide de manière à faire circuler par l'intermédiaire de la sortie de pompe du liquide sous pression amorti depuis le dispositif d'entraînement de liquide,
**caractérisée en ce que** le conduit de pompe aval (870, 871, 872) est composé :
- par un organe rigide formé d'un seul tenant (801) s'étendant depuis le dispositif d'entraînement de liquide (815, 816) jusqu'à la sortie de pompe (820) ; et
- par un amortisseur de liquide (860) s'étendant sur au moins une partie de l'organe rigide (801),
l'organe rigide et l'amortisseur de liquide contenant ensemble le conduit de pompe aval (870, 871, 872).

2. Pompe selon la revendication 1, dans laquelle le dispositif d'entraînement de liquide (815, 816) comprend :
- une chambre de pompe (816) en communication fluidique avec l'entrée de pompe (810) et la sortie de pompe (820) par l'intermédiaire du conduit de pompe aval (870, 871, 872) ; et en particulier
- un piston de pompe à mouvement alternatif (815) contenu dans la chambre de pompe (816) pour mettre sous pression et faire circuler du liquide depuis l'entrée de pompe (810) à travers la chambre de pompe (816) jusqu'à la sortie de pompe (820), facultativement un ressort de piston étant prévu avec la chambre de pompe pour exercer une force sur le piston, un solénoïde électromagnétique étant en particulier prévu dans la périphérie de la chambre de pompe pour entraîner le piston, un mouvement alternatif axial du piston à l'intérieur de la chambre de pompe étant permis en raison d'une activation au moyen du solénoïde.

3. Pompe selon la revendication 1 ou 2, dans laquelle le conduit de pompe aval (870, 871, 872) comprend une section d'amortissement de liquide (870) délimitée par l'amortisseur de liquide (860).

4. Pompe selon la revendication 3, dans laquelle l'amortisseur de liquide (860) comprend une membrane souple (861) délimitant la section d'amortissement de liquide (870), facultativement la membrane souple (861) comprenant au moins un élément parmi silicone, caoutchouc et TPE et/ou ayant une dureté shore dans la plage de 50 à 90.

5. Pompe selon la revendication 3 ou 4, dans laquelle l'amortisseur de liquide (860) comprend une cavité de gaz (862), en particulier une cavité d'air, qui est séparée de la section d'amortissement de liquide (870) par la membrane souple (861).

6. Pompe selon la revendication 5, dans laquelle l'amortisseur de liquide (860) comprend un capuchon (865) délimitant la cavité de gaz (862), en particulier un capuchon fileté et/ou un capuchon amovible.

7. Pompe selon la revendication 6, dans laquelle le capuchon (865) est fixé dans un boîtier de pompe (801).

8. Pompe selon la revendication 6 ou 7, dans laquelle le capuchon (865) est agencé pour fixer la membrane souple (861) contre la section d'amortissement de liquide (870).

9. Pompe selon l'une quelconque des revendications 3 à 8, dans laquelle le conduit de pompe aval (870, 871, 872) comprend une section de direction de liquide (871) guidant du liquide depuis le dispositif d'entraînement de liquide (815, 816) dans la section d'amortissement de liquide (870) contre l'amortisseur de liquide (860), de sorte que du liquide guidé par la section de direction est redirigé par l'amortisseur de liquide.

10. Pompe selon la revendication 9, dans laquelle la section de direction de liquide (871) et la section d'amortissement de liquide (870) définissent des directions d'écoulement respectives qui sont à un angle dans la plage de 30 à 150 degrés, en particulier dans la plage de 60 à 120 degrés, comme par exemple de 75 à 105 degrés, par exemple de 85 à 95 degrés.

11. Pompe selon l'une quelconque des revendications 3 à 10, dans laquelle le conduit de pompe aval comprend une section de redirection de liquide (872) guidant du liquide depuis la section d'amortissement de liquide (870) jusqu'à la sortie de pompe (820).

12. Pompe selon la revendication 11, dans laquelle la section de redirection de liquide (872) et la section d'amortissement de liquide (870) définissent des directions d'écoulement respectives qui sont à un angle dans la plage de 30 à 150 degrés.

13. Pompe selon la revendication 12, dans laquelle les directions d'écoulement respectives sont à un angle dans la plage de 60 à 120 degrés, comme par exemple de 75 à 105 degrés, par exemple de 85 à 95 degrés.

14. Pompe selon l'une quelconque des revendications précédentes, qui comprend un boîtier de pompe (801) qui est formée d'une seule pièce avec ledit organe rigide et qui contient facultativement le dispositif d'entraînement de liquide (815, 816).

15. Machine de préparation de boisson (1) comprenant une pompe (800) telle que définie dans l'une quelconque des revendications précédentes.
